# EUROPEAN PATENT APPLICATION

(11) **EP 4 664 497 A1**
(43) Date of publication of application: **17.12.2025**
(21) Application number: 24796678.1
(22) Date of filing: 27.03.2024
(51) Int. Cl.: H01G 4/30

(54) **MULTILAYER CERAMIC CAPACITOR**

(30) Priority: 25.04.2023 JP 2023071818
(71) Applicant: Murata Manufacturing Co., Ltd., Nagaokakyo-shi, Kyoto 617-8555 (JP)
(72) Inventor: HIRAI, Kenta, Nagaokakyo-shi, Kyoto 617-8555 (JP)
(74) Representative: Zimmermann, Tankred Klaus
(86) International application number: PCT/JP2024/012176
(87) International publication number: WO 2024/224920

(57) **Abstract**

[Problem] To provide a multilayer ceramic capacitor capable of suppressing occurrence of cracks generated inside a laminate due to electrostriction when a high voltage is applied.

[Solution] A multilayer ceramic capacitor according to the present invention has: a laminate formed of an inner layer part that includes a plurality of laminated dielectric layers and a plurality of laminated internal electrode layers, that includes a first main surface and a second main surface facing each other in the height direction being the lamination direction of the plurality of dielectric layers, a first lateral surface and a second lateral surface facing each other in the width direction orthogonal to the height direction, and a first end surface and a second end surface facing each other in the length direction orthogonal to the height direction and the width direction, and that is obtained by alternately laminating the dielectric layers and the internal electrode layers, and an outer layer part disposed so as to sandwich the inner layer part from the first main surface side and the second main surface side; a first external electrode disposed on the first end surface; and a second external electrode disposed on the second end surface. The inner layer part is formed of inner dielectric layers among the plurality of dielectric layers disposed in the inner layer part. The inner dielectric layers contain voids. The inner dielectric layers have a width-direction center part-side dielectric layer disposed in a region of a center part in the width direction of the inner layer part, and a width-direction end part-side dielectric layer disposed in a region of an end part in the width direction of the inner layer part. The amount of voids contained in the width-direction end part-side dielectric layer is less than the amount of voids in the width-direction center part-side dielectric layer.

## Description

### TECHNICAL FIELD

The present invention relates to a multilayer ceramic capacitor.

### BACKGROUND ART

A conventional multilayer ceramic capacitor includes a capacitor body constituted by a ceramic sintered body composed of a dielectric such as barium titanate, and in the capacitor body, internal electrodes made of a noble metal material such as Ag or a Ag-Pd alloy or a base metal material such as Ni are arranged with a ceramic layer (dielectric layer) interposed therebetween so that the internal electrodes are led out to one end surface and the other end surface in an alternating manner. The internal electrodes having one potential are electrically connected to one external electrode, and the internal electrodes having the other potential are electrically connected to another external electrode (see Patent Document 1).

In the multilayer ceramic capacitor described in Patent Document 1, internal electrodes are composed of a metal material, and the external electrodes are composed of a glass component and a plurality of metal components including a metal that is the same as or can be alloyed with the metal material included in the internal electrodes. The external electrodes are bonded to a wiring board via a conductive resin adhesive, and an area occupancy percentage (porosity) of the metal components to a cross-sectional area of the external electrode is 60% to 95%. Due to this configuration, the multilayer ceramic capacitor can be mounted on the wiring board at low cost with high reliability without using solder.

### Citation List

### Patent Document

Patent Document 1: Japanese Unexamined Patent Application, Publication No. 2001-237137

### DISCLOSURE OF THE INVENTION

### Problems to be Solved by the Invention

However, in a multilayer ceramic capacitor having a general structure such as that described in Patent Document 1, electrostriction occurs when a voltage is applied. The stress caused by the electrostriction concentrates at the ends in the length direction and the width direction of an effective portion of the multilayer ceramic capacitor and at the position of 1/2 of the dimension in the height direction of the multilayer ceramic capacitor. When a high voltage is applied, cracks form from these points at which the stress concentrates as starting points. Cracks caused by electrostriction are difficult to screen out, yet they can lead to degradation in high-temperature load reliability and moisture resistance, posing a risk of issues in the market.

Therefore, there are several methods of reducing cracks due to electrostriction, and among the methods, a typical measure is to set a voltage applied at the time of screening to a relatively low level so that electrostriction is prevented. In a case where electrostriction occurs at a low voltage, a voltage necessary for the screening cannot be applied, thereby giving rise to a problem in that the screening becomes less effective.

To address the above-described disadvantage, it is a main object of the present invention to provide a multilayer ceramic capacitor capable of reducing cracks that can be formed inside a multilayer body due to electrostriction when a high voltage is applied.

### Means for Solving the Problems

A multilayer ceramic capacitor according to the present invention includes: a multilayer body including a plurality of dielectric layers that are laminated and a plurality of internal electrode layers that are laminated, the multilayer body having a first main surface and a second main surface opposed to each other in a height direction in which the plurality of dielectric layers are laminated, a first side surface and a second side surface opposed to each other in a width direction orthogonal to the height direction, and a first end surface and a second end surface opposed to each other in a length direction orthogonal to the height direction and the width direction, the multilayer body including an inner layer portion in which the plurality of dielectric layers and the plurality of internal electrode layers are alternately laminated, and outer layer portions respectively disposed adjacent to the first main surface and the second main surface so as to sandwich the inner layer portion therebetween; a first external electrode disposed on the first end surface; and a second external electrode disposed on the second end surface. In the multilayer ceramic capacitor, the plurality of dielectric layers in the multilayer body include an inner dielectric layer that constitutes the inner layer portion, the inner dielectric layer contains voids, the inner dielectric layer includes a widthwise central dielectric layer portion located in a central region in the width direction of the inner layer portion and a widthwise end dielectric layer portion located in an end region in the width direction of the inner layer portion, and the widthwise end dielectric layer portion contains a smaller quantity of the voids than the widthwise central dielectric layer portion.

In a case where voids are present in a region of the dielectric layer, the region with the voids has a lower mechanical strength than a region filled with the ceramic. Therefore, the presence of the void at a position where electrostrictive stress concentrates allows an electrostrictive crack to form in the dielectric layer from the void as the starting point. Electrostriction is likely to occur in an end portion in the width direction of the dielectric layer in the inner layer portion of the multilayer body. In the multilayer ceramic capacitor of the present invention, electrostrictive stress concentrates in an area near the end in the width direction of the dielectric layer included in the inner layer portion of the multilayer body, and this area is made to have a smaller quantity of voids than the central portion in the width direction of the dielectric layer, thereby making it possible to reduce the occurrence of electrostrictive cracks. In addition, the configuration in which the end portion in the width direction of the dielectric layer contains a smaller quantity of voids improves the degree of sintering of the ceramic, whereby a permittivity ε of the end portion in the width direction improves, and the capacitance can be increased. Effects of the Invention

The present invention can provide a multilayer ceramic capacitor capable of reducing cracks that can be formed inside a multilayer body due to electrostriction when a high voltage is applied.

The aforementioned object of the present invention, other objects thereof, features thereof, and advantages thereof will become clearer from the description of embodiments of the invention provided below with reference to the drawings.

### BRIEF DESCRIPTION OF THE DRAWINGS

FIG. 1 is an external perspective view illustrating an example of a multilayer ceramic capacitor according to an embodiment of the present invention;
FIG. 2 is a cross-sectional view taken along line II-II in FIG. 1;
FIG. 3 is a cross-sectional view taken along line III-III in FIG. 1;
FIG. 4(a) is a cross-sectional view taken along line II-II in FIG. 1 and schematically illustrates inner dielectric layers, and FIG. 4(b) is a cross-sectional view taken along line III-III in FIG. 1 and schematically illustrates the inner dielectric layers; and

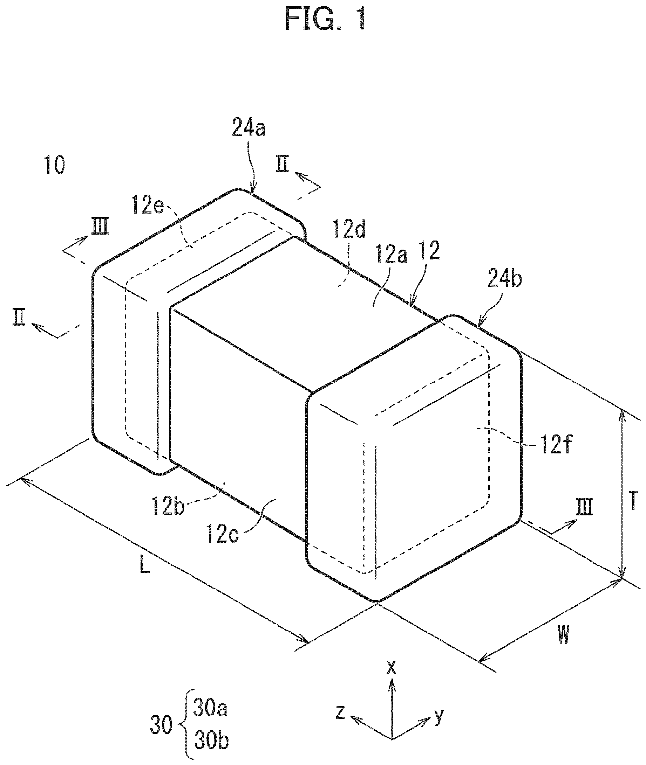

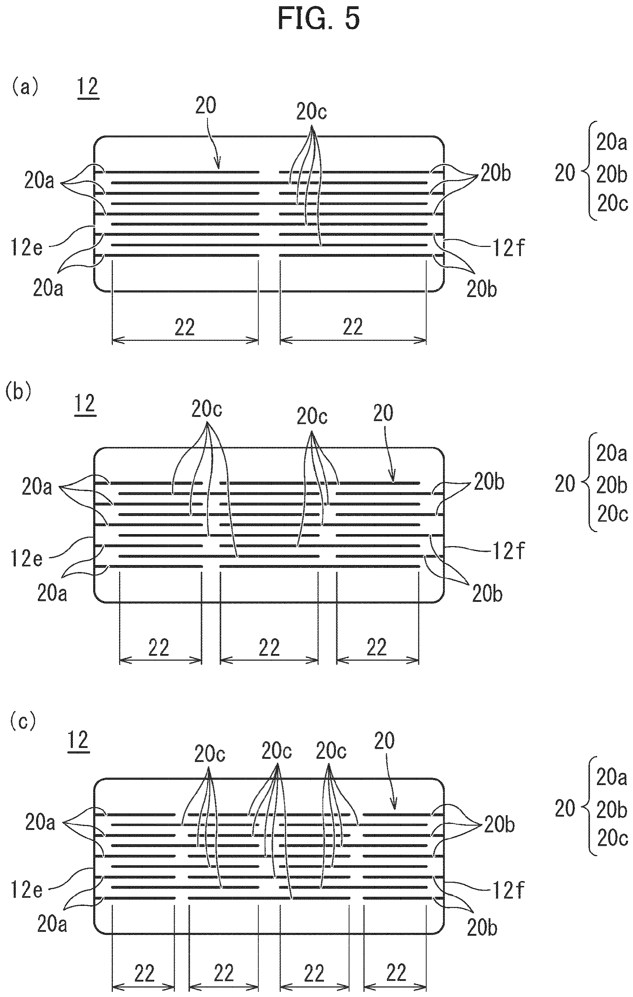

FIG. 5(a) is a cross-sectional view taken along line III-III in FIG. 1 and illustrates a structure in which a counter electrode portion of an internal electrode layer of a multilayer ceramic capacitor according to an embodiment of the present invention is divided into two, FIG. 5(b) is a cross-sectional view taken along line III-III in FIG. 1 and illustrates a structure in which a counter electrode portion of an internal electrode layer of a multilayer ceramic capacitor according to the present invention is divided into three, and FIG. 5(c) is a cross-sectional view taken along line III-III in FIG. 1 and illustrates a structure in which a counter electrode portion of an internal electrode layer of a multilayer ceramic capacitor according to the present invention is divided into four.

### PREFERRED MODE FOR CARRYING OUT THE INVENTION

### 1. Multilayer Ceramic Capacitor

A multilayer ceramic capacitor according to an embodiment of the present invention will be described below.

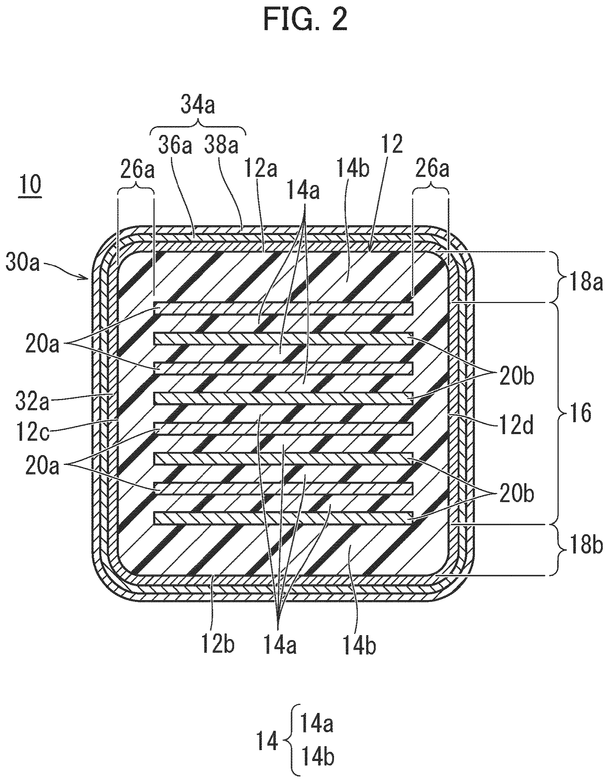

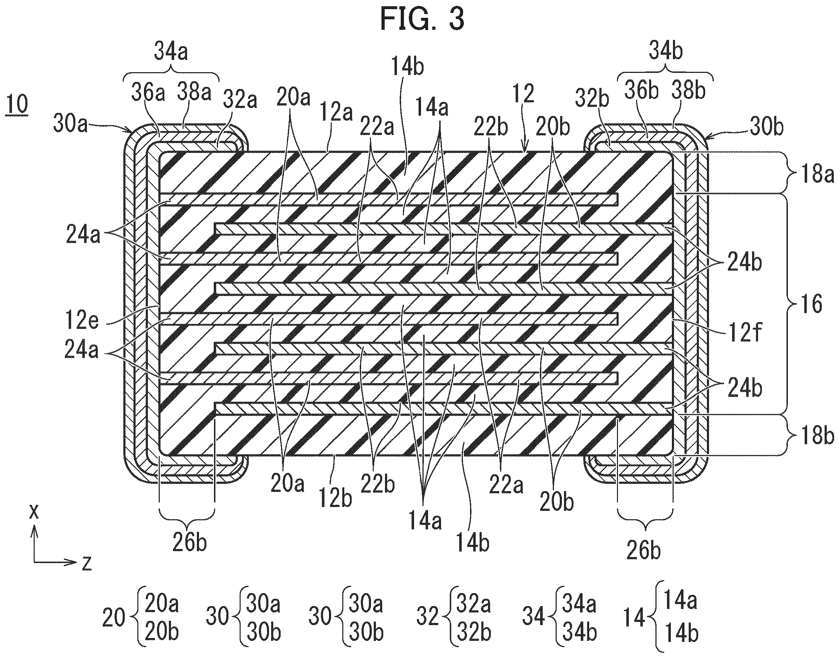

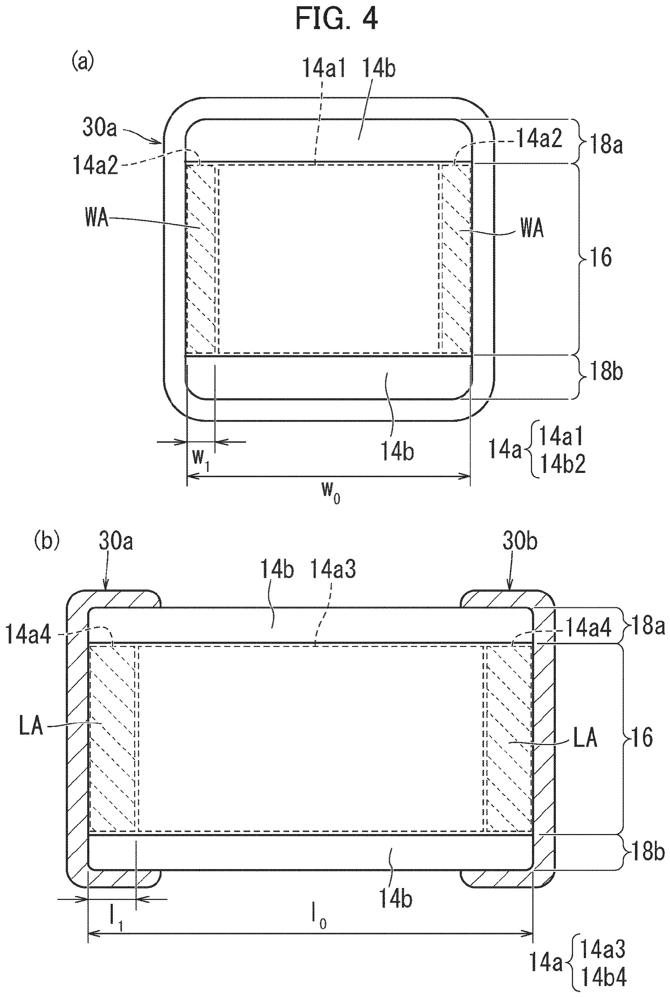

FIG. 1 is an external perspective view illustrating an example of the multilayer ceramic capacitor according to the embodiment of the present invention. FIG. 2 is a cross-sectional view taken along line II-II in FIG. 1. FIG. 3 is a cross-sectional view taken along line III-III in FIG. 1. FIG. 4(a) is a cross-sectional view taken along line II-II in FIG. 1 and schematically illustrates inner dielectric layers, and FIG. 4(b) is a cross-sectional view taken along line III-III in FIG. 1 and schematically illustrates the inner dielectric layers.

As illustrated in FIGS. 1 to 3, the multilayer ceramic capacitor 10 includes a multilayer body 12 having a rectangular parallelepiped shape, and external electrodes 30 arranged on opposite ends of the multilayer body 12.

The multilayer body 12 includes a plurality of laminated dielectric layers 14 and a plurality of internal electrode layers 20 arranged on the dielectric layers 14. The multilayer body 12 has a first main surface 12a and a second main surface 12b opposed to each other in a height direction x, a first side surface 12c and a second side surface 12d opposed to each other in a width direction y orthogonal to the height direction x, and a first end surface 12e and a second end surface 12f opposed to each other in a length direction z orthogonal to the height direction x and the width direction y. The multilayer body 12 has rounded corners and rounded ridges.

Here, the corner is where three adjacent surfaces of the multilayer body 12 meet each other, and the ridge is where two adjacent surfaces of the multilayer body 12 meet each other. The "rectangular parallelepiped shape" refers to a general member having a first main surface 12a, a second main surface 12b, a first side surface 12c, a second side surface 12d, a first end surface 12e, and a second end surface 12f. The first main surface 12a, the second main surface 12b, the first side surface 12c, the second side surface 12d, the first end surface 12e, and the second end surface 12f may have projections and depressions or the like formed in a portion or the entirety thereof. The dielectric layers 14 and the internal electrode layers 20 are laminated in the height direction x.

As illustrated in FIGS. 2 and 3, the multilayer body 12 includes: an inner layer portion 16 in which the dielectric layers 14 and the internal electrode layers 20 are alternately laminated in the height direction x extending between the first main surface 12a and the second main surface 12b; a first outer layer portion 18a constituted by two or more dielectric layers 14 disposed between the first main surface 12a and the internal electrode layer 20 closest to the first main surface 12a; and a second outer layer portion 18b constituted by two or more dielectric layers 14 disposed between the second main surface 12b and the internal electrode layer 20 closest to the second main surface 12b.

The plurality of dielectric layers 14 include inner dielectric layers 14a that constitute the inner layer portion 16. Specifically, in the inner layer portion 16, the plurality of internal electrode layers 20 face each other with the inner dielectric layers 14a interposed therebetween. Each inner dielectric layer 14a contains voids therein.

As illustrated in FIG. 4(a), the inner dielectric layers 14a include a widthwise central dielectric layer portion 14a1 located in a central region in the width direction y of the inner layer portion 16, and widthwise end dielectric layer portions 14a2 located in end regions in the width direction y of the inner layer portion 16. Each widthwise end dielectric layer portion 14a2 contains a smaller quantity of voids than the widthwise central dielectric layer portion 14a1. In FIG. 4(a), the internal electrode layers 20 are not illustrated.

In a WT cross section, a difference between a void area occupancy percentage PCW in the widthwise central dielectric layer portion 14a1 and a void area occupancy percentage PEW in each widthwise end dielectric layer portion 14a2 is preferably 1.0% or more and 8.0% or less.

The widthwise end dielectric layer portions 14a2 each include a region WA containing a smaller quantity of voids than the widthwise central dielectric layer portion 14a1, and the regions WA reside from the opposite ends to inner locations in the width direction y of the inner layer portion 16. The dimension w₁ in the width direction y of each of the regions WA, which is included in the widthwise end dielectric layer portions 14a2 and containing a smaller quantity of voids than the widthwise central dielectric layer portion 14a1, is preferably 15% or less of the dimension w₀ in the width direction y of the inner layer portion 16.

As illustrated in FIG. 4(b), the inner dielectric layers 14a include a lengthwise central dielectric layer portion 14a3 located in a central region in the length direction z of the inner layer portion 16, and lengthwise end dielectric layer portions 14a4 located in end regions in the length direction z of the inner layer portion 16. Preferably, each lengthwise end dielectric layer portion 14a4 contains a smaller quantity of voids than the lengthwise central dielectric layer portion 14a3. In FIG. 4(b), the internal electrode layers 20 are not illustrated.

In an LT cross section, a difference between a void area occupancy percentage PCL in the lengthwise central dielectric layer portion 14a3 and a void area occupancy percentage PEL in each lengthwise end dielectric layer portion 14a4 is preferably 4.0% or more and 8.0% or less.

The lengthwise end dielectric layer portions 14a4 each include a region LA containing a smaller quantity of voids than the lengthwise central dielectric layer portion 14a3, and the regions LA reside from the opposite ends to inner locations in the length direction z of the inner layer portion 16. The dimension l₁ in the length direction z of each of the regions LA, which is included in the width lengthwise end dielectric layer portions 14a4 and containing a smaller quantity of voids than the lengthwise central dielectric layer portion 14a3, is preferably 10% or less of the dimension l₀ in the length direction z of the inner layer portion 16.

The voids are measured by the following method. An image of a cross section of the multilayer body 12 is captured using a scanning electron microscope (SEM), and portions filled with the ceramic and portions with voids are binarized. The ratio of the area occupied by the portions with voids to the entire area of the binarized image is defined as a voidage.

The first outer layer portion 18a is adjacent to the first main surface 12a of the multilayer body 12 and constituted by an aggregate of two or more outer dielectric layers 14b, which are the dielectric layers 14 disposed between the first main surface 12a and the internal electrode layer 20 closest to the first main surface 12a. The second outer layer portion 18b is adjacent to the second main surface 12b of the multilayer body 12 and constituted by an aggregate of two or more outer dielectric layers 14b, which are the dielectric layers 14 included between the second main surface 12b and the internal electrode layer 20 closest to the second main surface 12b. The inner layer portion 16 is a region included between the first outer layer portion 18a and the second outer layer portion 18b.

Although the multilayer body 12 is not limited to any particular dimensions, it preferably has a dimension of 0.95 mm or greater and 3.1 mm or less in the length direction z, a dimension of 0.49 mm or greater and 2.47 mm or less in the width direction y, and a dimension of 0.49 mm or greater and 2.47 mm or less in the height direction x.

The dielectric layers 14 can be made of, for example, a dielectric material. As such a dielectric material, a dielectric ceramic containing BaTiO₃, CaTiO₃, SrTiO₃, CaZrO₃, or the like as a main component can be used, for example. In the case where the foregoing dielectric material is included as the main component, a subcomponent such as a Mn compound, a Fe compound, a Cr compound, a Co compound, or a Ni compound, may be added at lower amount than the main component, depending on the desired characteristics of the multilayer body 12.

Preferably, each dielectric layer 14 after being subjected to firing has a thickness of 0.5 µm or greater and 10 µm or less.

The number of laminated dielectric layers 14 is preferably 50 or more and 1000 or less.

First internal electrode layers 20a are arranged on the plurality of dielectric layers 14 and are disposed inside the multilayer body 12. Each first internal electrode layer 20a includes a first counter electrode portion 22a that faces second internal electrode layers 20b, and a first lead-out electrode portion 24a that is disposed in one end portion of the first internal electrode layer 20a and extends from the first counter electrode portion 22a to the first end surface 12e of the multilayer body 12. Each first lead-out electrode portion 24a has an end led out to the surface of the first end surface 12e and exposed from the multilayer body 12. In other words, the end of each first lead-out electrode portion 24a is not exposed on the first main surface 12a, the second main surface 12b, the second end surface 12f, the first side surface 12c, or the second side surface 12d. In more detail, each first internal electrode layer 20a has an end located slightly inwardly with respect to the second end surface 12f.

Although the first counter electrode portion 22a of each first internal electrode layer 20a may have any shape without particular limitation, it preferably has a rectangular shape in plan view. Nevertheless, the first counter electrode portion 22a may have a shape with rounded corner portions in plan view or a shape with oblique corner portions (tapered shape) in plan view. Alternatively, it may have a tapered shape that is inclined as approaching either side in plan view.

Although the first lead-out electrode portion 24a of each first internal electrode layer 20a may have any shape without particular limitation, it preferably has a rectangular shape in plan view. Nevertheless, the first lead-out electrode portion 24a may have a shape with rounded corner portions in plan view or a shape with oblique corner portions (tapered shape) in plan view. Alternatively, it may have a tapered shape that is inclined as approaching toward either side in plan view.

The first counter electrode portion 22a and the first lead-out electrode portion 24a of each first internal electrode layer 20a may have the same width, or one of them may be smaller in width than the other.

The second internal electrode layers 20b are arranged on the plurality of dielectric layers 14 and are disposed inside the multilayer body 12. Each second internal electrode layer 20b includes a second counter electrode portion 22b that faces the first internal electrode layers 20a, and a second lead-out electrode portion 24b that is disposed in one end portion of the second internal electrode layer 20b and extends from the second counter electrode portion 22b to the second end surface 12f of the multilayer body 12. Each second lead-out electrode portion 24b has an end led out to the surface of the second end surface 12f and exposed from the multilayer body 12. In other words, the end of each second lead-out electrode portion 24b is not exposed on the first main surface 12a, the second main surface 12b, the first end surface 12e, the first side surface 12c, or the second side surface 12d. In more detail, each second internal electrode layer 20b has an end located slightly inwardly with respect to the first end surface 12e.

Although the second counter electrode portion 22b of each second internal electrode layer 20b may have any shape without particular limitation, it preferably has a rectangular shape in plan view. Nevertheless, the second counter electrode portion 22b may have a shape with rounded corner portions in plan view or a shape with oblique corner portions (tapered shape) in plan view. Alternatively, it may have a tapered shape that is inclined as approaching either side in plan view.

Although the second lead-out electrode portion 24b of each second internal electrode layer 20b may have any shape without particular limitation, it preferably has a rectangular shape in plan view. Nevertheless, the second lead-out electrode portion 24b may have a shape with rounded corner portions in plan view or a shape with oblique corner portions (tapered shape) in plan view. Alternatively, it may have a tapered shape that is inclined as approaching toward either side in plan view.

The second counter electrode portion 22b and the second lead-out electrode portion 24b of each second internal electrode layer 20b may have the same width, or one of them may be smaller in width than the other.

The multilayer body 12 includes side portions (hereinafter each may be referred to as a "W gap") 26a. One of the side portions 26a is defined between the first side surface 12c and one end in the width direction y of each first counter electrode portion 22a and between the first side surface 12c and one end in the width direction y of each second counter electrode portion 22b, and the other of the side portions 26a is defined between the second side surface 12d and the other end in the width direction y of each first counter electrode portion 22a and between the second side surface 12d and the other end in the width direction y of each second counter electrode portion 22b. The multilayer body 12 further includes end portions (hereinafter each may be referred to as an "L gap") 26b. One of the end portions 26b is defined between the second end surface 12f and the end of each first internal electrode layer 20a opposite to the first lead-out electrode portion 24a, and the other of the end portions 26b is formed between the first end surface 12e and the end of each second internal electrode layer 20b opposite to the second lead-out electrode portion 24b.

The internal electrode layers 20 can be constituted by, for example, an appropriate conductive material, examples of which include metals such as Ni, Cu, Ag, Pd, and Au, and an alloy containing at least one of these metals such as a Ag-Pd alloy. The internal electrode layers 20 may further contain dielectric particles of the same composition system as the ceramic contained in the dielectric layers 14.

The thickness of each internal electrode layer 20 is preferably 0.2 µm or greater and 2.0 µm or less.

The total number of the first internal electrode layer 20a and the second internal electrode layer 20b is preferably 50 or more and 1000 or less.

Referring to FIG. 5, the multilayer body 12 illustrated in FIG. 1 may have a structure in which floating internal electrode layers 20c that are not led out to either the first end surface 12e or the second end surface 12f are arranged in addition to the first internal electrode layers 20a and the second internal electrode layers 20b, and in which a counter electrode portion 22 is divided into two or more segments due to the floating internal electrode layers 20c. For example, the multilayer body may have a two-segment structure illustrated in FIG. 5(a), a three-segment structure illustrated in FIG. 5(b), or a four-segment structure illustrated in FIG. 5(c), and it goes without saying that it may have a four or more-segment structure. By adopting the structure in which the counter electrode portion 22 is divided into two or more segments, a plurality of capacitor components are formed between the first internal electrode layers 20a, the second internal electrode layers 20b, and the floating internal electrode layers 20c that face each other, and these capacitor components are connected in series. As a result, a low voltage is applied to each of the capacitor components, thereby allowing the multilayer ceramic capacitor 10 to have a high breakdown voltage.

Similarly to the first internal electrode layers 20a and the second internal electrode layers 20b, the floating internal electrode layers 20c can be constituted by, for example, an appropriate conductive material, examples of which include metals such as Ni, Cu, Ag, Pd and Au, and an alloy containing at least one of these metals such as a Ag-Pd alloy.

As illustrated in FIGS. 1 to 3, the external electrodes 30 are disposed on and around the first end surface 12e and the second end surface 12f of the multilayer body 12.

Each external electrode 30 includes a base electrode layer 32 containing a metal component and glass, and a plating layer 34 disposed on a surface of the base electrode layer 32.

The external electrodes 30 include a first external electrode 30a and a second external electrode 30b.

The first external electrode 30a is connected to the first internal electrode layers 20a and is disposed on at least the surface of the first end surface 12e. The first external electrode 30a extends from the first end surface 12e of the multilayer body 12 to be also disposed on a portion of the first main surface 12a, a portion of the second main surface 12b, a portion of the first side surface 12c, and a portion of the second side surface 12d. In this case, the first external electrode 30a is electrically connected to the first lead-out electrode portions 24a of the first internal electrode layers 20a.

The second external electrode 30b is connected to the second internal electrode layers 20b and is disposed on at least the surface of the second end surface 12f. The second external electrode 30b extends from the second end surface 12f of the multilayer body 12 to be also disposed on a portion of the first main surface 12a, a portion of the second main surface 12b, a portion of the first side surface 12c, and a portion of the second side surface 12d. In this case, the second external electrode 30b is electrically connected to the second lead-out electrode portions 24b of the second internal electrode layers 20b.

In the multilayer body 12, the first counter electrode portions 22a of the first internal electrode layers 20a and the second counter electrode portions 22b of the second internal electrode layers 20b face each other with the dielectric layers 14 interposed therebetween, thereby producing capacitance. As a result, capacitance can be obtained between the first external electrode 30a to which the first internal electrode layers 20a are connected and the second external electrode 30b to which the second internal electrode layers 20b are connected, whereby the characteristics of the capacitor are developed.

The base electrode layer 32 includes a first base electrode layer 32a and a second base electrode layer 32b.

The first base electrode layer 32a is connected to the first internal electrode layers 20a and is disposed on the surface of the first end surface 12e. The first base electrode layer 32a extends from the first end surface 12e to be also disposed on a portion of the first main surface 12a, a portion of the second main surface 12b, a portion of the first side surface 12c, and a portion of the second side surface 12d. In this case, the first base electrode layer 32a is electrically connected to the first lead-out electrode portions 24a of the first internal electrode layers 20a.

The second base electrode layer 32b is connected to the second internal electrode layers 20b and is disposed on the surface of the second end surface 12f. The second base electrode layer 32b extends from the second end surface 12f to be also disposed on a portion of the first main surface 12a, a portion of the second main surface 12b, a portion of the first side surface 12c, and a portion of the second side surface 12d. In this case, the second base electrode layer 32b is electrically connected to the second lead-out electrode portions 24b of the second internal electrode layers 20b.

The base electrode layer 32 includes at least one selected from a baked layer, a conductive resin layer, a thin film layer, or the like.

The following describes a case where the base electrode layer 32 is the above-mentioned baked layer, a case where the base electrode layer 32 is the above-mentioned conductive resin layer, and a case where the base electrode layer 32 is the above-mentioned thin film layer.

### (In the Case of Baked Layer)

The baked layer includes a metal component and glass. The metal component of the baked layer includes, for example, at least one selected from Cu, Ni, Ag, Pd, a Ag-Pd alloy, Au, or the like. The baked layer is formed by baking a conductive paste containing glass and the metal and applied to the multilayer body. The baked layer is formed by way of firing a multilayer chip including the internal electrode layers 20 and the dielectric layers 14 concurrently with the conductive paste applied to the multilayer chip. However, the baked layer may be formed by way of baking after the firing of the multilayer chip including the internal electrode layers 20 and the dielectric layers 14. The baked layer may include a plurality of layers.

Preferably, the first base electrode layer 32a on the first end surface 12e has, in its central portion in the height direction x, a thickness of, for example, about 10 µm or greater and about 150 µm or less in the length direction z extending between the first end surface 12e and the second end surface 12f.

Preferably, the second base electrode layer 32b on the second end surface 12f has, in its central portion in the height direction x, a thickness of, for example, about 10 µm or greater and about 150 µm or less in the length direction z extending between the first end surface 12e and the second end surface 12f.

Preferably, the first base electrode layer 32a on a portion of the first main surface 12a and a portion of the second main surface 12b has, in its central portion in the length direction z extending between the first end surface 12e and the second end surface 12f, a thickness of, for example, about 10 µm or greater and about 100 µm or less in the height direction x extending between the first main surface 12a and the second main surface 12b.

Preferably, the second base electrode layer 32b on a portion of the first main surface 12a and a portion of the second main surface 12b has, in its central portion in the length direction z extending between the first end surface 12e and the second end surface 12f, a thickness of, for example, about 10 µm or greater and about 100 µm or less in the height direction x extending between the first main surface 12a and the second main surface 12b.

Preferably, the first base electrode layer 32a on a portion of the first side surface 12c and a portion of the second side surface 12d has, in its central portion in the length direction z extending between the first end surface 12e and the second end surface 12f, a thickness of, for example, about 10 µm or greater and about 100 µm or less in the width direction y extending between the first side surface 12c and the second side surface 12d.

Preferably, the second base electrode layer 32b on a portion of the first side surface 12c and a portion of the second side surface 12d has, in its central portion in the length direction z extending between the first end surface 12e and the second end surface 12f, a thickness of, for example, about 10 µm or greater and about 100 µm or less in the width direction y extending between the first side surface 12c and the second side surface 12d.

### (In the Case of Conductive Resin Layer)

The conductive resin layer includes a first conductive resin layer and a second conductive resin layer.

Preferably, the first conductive resin layer is provided as the first base electrode layer 32a and covers another layer such as a baked layer. Preferably, the second conductive resin layer is provided as the second base electrode layer 32b and covers another layer such as a baked layer.

Specifically, it is preferable that the first conductive resin layer as the first base electrode layer 32a and the second conductive resin layer as the second base electrode layer 32b are respectively disposed on the other layers such as the baked layers respectively formed on the first end surface 12e and the second end surface 12f, and further extend over portions of the other layers such as the baked layers disposed on the first main surface 12a, the second main surface 12b, the first side surface 12c, and the second side surface 12d. Nevertheless, the first conductive resin layer and the second conductive resin layer may be disposed only on the other layers such as the baked layers on the first end surface 12e and the second end surface 12f.

Each of the first conductive resin layer and the second conductive resin layer preferably has a thickness of, for example, about 10 µm or greater and about 200 µm or less.

Each of the first conductive resin layer and the second conductive resin layer contains a thermosetting resin and a metal component.

Due to including the thermosetting resin, the first conductive resin layer and the second conductive resin layer are more flexible than the base electrode layer 32 that is constituted by, for example, a plated film or a fired product of a conductive paste. For this reason, the conductive resin layers function as buffer layers, making it possible to prevent cracks from forming in the multilayer ceramic capacitor 10 even when a physical impact or an impact due to a thermal cycle is applied to the multilayer ceramic capacitor 10.

Specific examples of the thermosetting resin include various known thermosetting resins such as an epoxy resin, a phenol resin, a urethane resin, a silicone resin, a polyimide resin, and the like. Among them, the epoxy resin excellent in heat resistance, moisture resistance, adhesion, etc., is one of the most suitable resins.

The first conductive resin layer and the second conductive resin layer preferably contain a curing agent together with the thermosetting resin. In a case of using an epoxy resin as the base resin, various known compounds such as a phenol-based compound, an amine-based compound, an acid anhydride-based compound, an imidazole-based compound, and the like can be used as the curing agent for the epoxy resin.

As the metal contained in the first conductive resin layer and the second conductive resin layer, Ag, Cu, or an alloy thereof can be used. Alternatively, a metal powder having a surface coated with Ag can be used. Preferably, a Ag-coated Cu or Ni powder is used as the metal powder.

Alternatively, Cu subjected to an antioxidant treatment can be used. The reason for using the Ag-coated metal is that an inexpensive metal can be employed as the base material while the above-described characteristics of Ag are maintained.

The first conductive resin layer and the second conductive resin layer preferably contain the metal in an amount of 35 vol% or more and 75 vol% or less with respect to the total volume of the conductive resin.

The metal contained in the first conductive resin layer and the second conductive resin layer may have any shape without particular limitation. The conductive filler may have a spherical shape, a flat shape, or the like.

The metal contained in the first conductive resin layer and the second conductive resin layer may have any average particle diameter without particular limitation. The conductive filler may have an average particle diameter of, for example, about 0.3 µm or greater and about 10 µm or less.

The metal contained in the first conductive resin layer and the second conductive resin layer is mainly responsible for the electrical conductivity of the conductive resin layers. Specifically, the conductive filler particles in contact with each other form conduction paths in the conductive resin layer.

The metal contained in the first conductive resin layer and the second conductive resin layer may have a spherical shape, a flat shape, or the like, but it is preferable to use a mixture of a spherical metal powder and a flat metal powder.

The conductive resin layers may be formed directly on the multilayer body without forming the baked layers.

Next, the first plating layer 34a and the second plating layer 34b, which are the plating layers 34 disposed on the base electrode layers 32, will be described with reference to FIGS. 2 and 3.

The first plating layer 34a and the second plating layer 34b include, for example, at least one selected from Cu, Ni, Sn, Ag, Pd, a Ag-Pd alloy, Au, or the like.

The first plating layer 34a is disposed so as to completely cover the first base electrode layer 32a. The second plating layer 34b is disposed so as to completely cover the second base electrode layer 32b.

Each of the first plating layer 34a and the second plating layer 34b may be composed of a plurality of layers. In this case, each plating layer 34 preferably has a two-layer structure including a lower plating layer (Ni plating layer) constituted by Ni plating provided on the base electrode layer 32 and an upper plating layer (Sn plating layer) constituted by Sn plating provided on the lower plating layer. In other words, in this case, the first plating layer 34a includes a first lower plating layer 36a and a first upper plating layer 38a disposed on a surface of the first lower plating layer 36a. Likewise, the second plating layer 34b includes a second lower plating layer 36b and a second upper plating layer 38b disposed on a surface of the second lower plating layer 36b.

Each lower plating layer 36 constituted by Ni plating is provided in order to prevent the base electrode layer 32 from being eroded by solder when the multilayer ceramic capacitor 10 is mounted, and each upper plating layer 38 constituted by Sn plating is provided in order to facilitate the mounting of the multilayer ceramic capacitor 10 by improving solder wettability when the multilayer ceramic capacitor 10 is mounted. Preferably, each of the lower plating layer 36 and the upper plating layer 38 has a thickness of 1.0 µm or greater and 15.0 µm or less.

The dimension in the length direction z of the multilayer ceramic capacitor 10 including the multilayer body 12, the first external electrode 30a, and the second external electrode 30b is defined as a dimension L, the dimension in the height direction x of the multilayer ceramic capacitor 10 including the multilayer body 12, the first external electrode 30a, and the second external electrode 30b is defined as a dimension T, and the dimension in the width direction y of the multilayer ceramic capacitor 10 including the multilayer body 12, the first external electrode 30a, and the second external electrode 30b is defined as a dimension W. The multilayer ceramic capacitor 10 is designed such that the dimension L in the length direction z is 1.0 mm or greater and 3.2 mm or less, the dimension W in the width direction y is 0.5 mm or greater and 2.5 mm or less, and the dimension T in the height direction x is 0.5 mm or greater and 2.5 mm or less. The dimensions of the multilayer ceramic capacitor 10 can be measured using a microscope.

In a case where voids are present in a region of the dielectric layer 14, the region with the voids has a lower mechanical strength than a region of the dielectric layer 14 filled with the ceramic. Therefore, the presence of the void at a position where the electrostrictive stress concentrates allows an electrostrictive crack to form in the dielectric layer 14 from the void as the starting point. Electrostriction is likely to occur in the end portions in the width direction y of the dielectric layers 14 in the inner layer portion 16 of the multilayer body 12.

In the multilayer ceramic capacitor 10 illustrated in FIG. 1, electrostrictive stress concentrates in areas near the ends in the width direction y of each dielectric layer 14 included in the inner layer portion 16 of the multilayer body 12, and these areas are made to have a smaller quantity of voids than the central portion in the width direction y of each dielectric layer 14. Specifically, the quantity of voids contained in each widthwise end dielectric layer portion 14a2 is smaller than the quantity of voids contained in the widthwise central dielectric layer portion 14a1. This configuration makes it possible to reduce the occurrence of electrostrictive cracks.

In the multilayer ceramic capacitor 10 illustrated in FIG. 1, the configuration in which each widthwise end dielectric layer portion 14a2 contains a smaller quantity of voids than the widthwise central dielectric layer portion 14a1 improves the degree of sintering of the ceramic, whereby a permittivity ε of the widthwise end dielectric layer portions 14a2 improves, and the capacitance can be increased.

In the multilayer ceramic capacitor 10 illustrated in FIG. 1, the occurrence of electrostrictive cracks can be further reduced in a case where in a WT cross section, the difference between the void area occupancy percentage PCW in the widthwise central dielectric layer portion 14a1 and the void area occupancy percentage PEW in each widthwise end dielectric layer portion 14a2 is 1.0% or more and 8.0% or less.

In the multilayer ceramic capacitor 10 illustrated in FIG. 1, it is possible to obtain a remarkable effect of reducing the occurrence of electrostrictive cracks in a case where each lengthwise end dielectric layer portion 14a4 contains a smaller quantity of voids than the lengthwise central dielectric layer portion 14a3.

In the multilayer ceramic capacitor 10 illustrated in FIG. 1, it is possible to obtain a further remarkable effect of reducing the occurrence of electrostrictive cracks in a case where in an LT cross section, the difference between the void area occupancy percentage PCL in the lengthwise central dielectric layer portion 14a3 and the void area occupancy percentage PEL in each lengthwise end dielectric layer portion 14a4 is 4.0% or more and 8.0% or less.

### 2. Method of Manufacturing Multilayer Ceramic Capacitor Next, a method of manufacturing the multilayer ceramic capacitor will be described.

First, dielectric layer-forming ceramic green sheets and an internal electrode layer-forming conductive paste are prepared. The dielectric layer-forming ceramic green sheets and the internal electrode layer-forming conductive paste include a binder and a solvent. The binder and the solvent may be known materials.

The internal electrode layer-forming conductive paste is printed in a predetermined pattern on the dielectric layer-forming ceramic green sheets by, for example, screen printing, gravure printing, or the like. In this manner, the ceramic green sheets having the printed pattern of the first internal electrode layer thereon and the ceramic green sheets having the printed pattern of the second internal electrode layer thereon are prepared.

### (Step of Producing Multilayer Sheet)

Subsequently, a predetermined number of outer layer portion-forming ceramic green sheets that are devoid of the printed pattern of the internal electrode layer are laminated, whereby a portion to form the second outer layer portion adjacent to the second main surface is formed. The ceramic green sheets having the printed pattern of the first internal electrode layer thereon and the ceramic green sheets having the printed pattern of the second internal electrode layer thereon are sequentially laminated over the portion to form the second outer layer portion so that the structure of the present invention is obtained, whereby the portion to form the inner layer portion is formed. A predetermined number of outer layer portion-forming ceramic green sheets that are devoid of the printed pattern of the internal electrode layer are laminated over the portion to form the inner layer portion, whereby a portion to form the first outer layer portion adjacent to the first main surface is formed. In this way, a multilayer sheet is produced.

### (Step of Producing Multilayer Block)

Next, the multilayer sheet is pressed in the lamination direction by means of isostatic pressing or the like to produce a multilayer block.

### (Step of Producing Multilayer Chips)

The multilayer block is cut into a predetermined size, thereby producing multilayer chips. In this step, the corners and ridges of the multilayer chips may be rounded by barrel polishing or the like.

### (Step of Producing Multilayer Body)

Next, the multilayer chips are fired to produce multilayer bodies. In this step, heat distribution in a firing furnace is adjusted during the heat treatment so that an amount of heat applied to a central portion in the width direction y of each multilayer chip is regulated to be less than an amount of heat applied to end portions in the width direction y of the multilayer chip. As a result, the end portions in the width direction y of the multilayer body are filled with the ceramic at a higher percentage than the central portion in the width direction y of the multilayer body, thereby achieving a configuration in which the end portions in the width direction y of the multilayer body contain a smaller quantity of voids than the central portion in the width direction y of the multilayer body. The firing temperature is preferably 900°C or higher and 1400°C or lower, although it depends on the temperatures of the dielectric layers and the internal electrode layers.

Next, a base electrode layer-forming conductive paste containing a metal component and a glass component is prepared.

### (Step of Forming External Electrodes)

The base electrode layer-forming conductive paste is applied to both end surfaces of each multilayer body, thereby forming the base electrode layers. The application of the conductive paste to both end surfaces of the multilayer body is performed by, for example, dipping, screen printing, or the like. The temperature of the baking in this step is preferably 700°C or higher and 900°C or lower.

Next, plating is performed on the surfaces of the base electrode layers to form plating layers, as needed. In the present embodiment, two plating layers are formed over the surface of each base electrode layer. Specifically, a Ni plating layer and a Sn plating layer are formed over each base electrode layer. The Ni plating layer and the Sn plating layer are sequentially formed by barrel plating, for example.

In the manner described above, the multilayer ceramic capacitor 10 according to the present embodiment is manufactured.

According to the method of manufacturing a multilayer ceramic capacitor of the present invention, the end portions in the width direction y of the multilayer body are filled with the ceramic at a higher percentage than the central portion in the width direction y of the multilayer body, thereby achieving a configuration in which the end portions in the width direction y of the multilayer body contain a smaller quantity of voids than the central portion in the width direction y of the multilayer body. Thus, a multilayer ceramic capacitor capable of reducing the percentage of occurrence of electrostrictive cracks can be produced.

### 3. Experimental Examples

Next, in order to confirm the effects exerted by the above-described multilayer ceramic capacitor according to the present invention, multilayer ceramic capacitors as test samples were prepared by the above-described manufacturing method, and were subjected to an experiment to check whether an electrostrictive crack formed.

### (1) Specifications of Experimental Samples

First, samples of multilayer ceramic capacitors of Examples 1 to 10 and a Comparative Example having the following specifications were prepared by the above-described manufacturing method.

### (Specifications of Multilayer Ceramic Capacitors)

- Dimensions (design values) of the multilayer ceramic capacitor: L × W × T = 1.6 mm × 0.8 mm × 0.8 mm
- Ceramic material as the main component of the dielectric layers: BaTiO₃
- Capacitance: 22 µF
- Rated voltage: 16 V
- Material for Internal electrode layers: Ni
- Structure of the external electrodes: a conductive metal (Cu) and a glass component
- Thickness of a central portion of the external electrode in the height direction, on each of the first end surface and the second end surface: about 90 µm
- Plating layer

Two-layer structure including a Ni plating layer and a Sn plating layer
Thickness of the Ni plating layer: about 3 µm
Thickness of the Sn plating layer: about 5 µm

### (2) Method of Evaluating Occurrence of Crack

The multilayer ceramic capacitors as the test samples were subjected to an electrostriction test using a breakdown voltage measurement apparatus. In detail, the breakdown voltage measurement apparatus was operated in the conditions that a voltage was raised to DC 150 V at a rate of 100 V/sec. The evaluation was made by observing the presence or absence of a crack using an ultrasonic flaw detection apparatus. Specifically, the multilayer ceramic capacitors as the test samples were first arranged with the main surfaces facing upward. Next, scanning was performed while the upward-facing main surfaces of the arranged multilayer ceramic capacitors were irradiated with an ultrasonic wave using an ultrasonic probe. At this time, reflected waves of the ultrasonic wave were observed, and the presence or absence of a crack was checked by detecting a reflected wave returning earlier than a bottom surface wave. The multilayer ceramic capacitors determined to have a crack were counted as ones having an electrostrictive defect, and the cracking percentages were calculated. For each of the Examples and Comparative Example, 100 test samples were prepared, and the cracking percentage were determined. The number of cracked multilayer ceramic capacitors with respect to the total number (100) of measured multilayer ceramic capacitors was defined as the cracking percentage. The cracking percentages were evaluated based on the following criteria: 0% or more and 10% or less was evaluated as excellent (indicated by bullseye symbol "⊙"), 11% or more and 30% or less was evaluated as "good" (indicated by circle symbol "o"), 31% or more and 50% or less was evaluated as "fair" (indicated by triangle symbol "Δ"), and 51% or more and 100% or less was evaluated as "fail" (indicated by cross symbol "x").

### (3) Results

Table 1 shows the cracking percentages of the dielectric layers in the multilayer bodies of Examples 1 to 10 and Comparative Example.

**[Table 1]**

| | A: Void Area Occupancy Percentage in Lengthwise Central Portion (%) | B: Void Area Occupancy Percentage in Lengthwise End Portion (%) | A-B | C: Void Area Occupancy Percentage in Widthwise Central Portion (%) | D: Void Area Occupancy Percentage in Widthwise End Portion (%) | C-D | Cracking Percentage (%) | Evaluation |
|---|---|---|---|---|---|---|---|---|
| Example 1 | 6.5 | 6.0 | 0.5 | 6.9 | 5.0 | 1.9 | 49 | Δ |
| Example 2 | 7.0 | 6.0 | 1.0 | 7.2 | 5.1 | 2.1 | 29 | ○ |
| Example 3 | 6.5 | 4.6 | 1.9 | 6.3 | 4.3 | 2.0 | 21 | ○ |
| Example 4 | 6.2 | 2.2 | 4.0 | 6.4 | 4.6 | 1.8 | 19 | ○ |
| Example 5 | 6.7 | 0.6 | 6.1 | 6.7 | 4.8 | 1.9 | 16 | ○ |
| Example 6 | 9.0 | 1.0 | 8.0 | 6.9 | 4.9 | 2.0 | 11 | ○ |
| Example 7 | 9.5 | 0.5 | 9.0 | 7.2 | 5.2 | 2.0 | 33 | Δ |
| Example 8 | 6.7 | 0.8 | 5.9 | 6.9 | 2.9 | 4.0 | 9 | ⊚ |
| Example 9 | 6.8 | 0.7 | 6.1 | 6.8 | 0.6 | 6.2 | 6 | ⊚ |
| Example 10 | 7.2 | 1.2 | 6.0 | 9.0 | 1.0 | 6.0 | 3 | ⊚ |
| Comparative Example | 6.5 | 6.5 | 0.0 | 7.0 | 7.0 | 0.0 | 66 | × |

As shown in Table 1, the test samples of Examples 1 to 10, in which each widthwise end dielectric layer portion contained a smaller quantity of voids than the widthwise central dielectric layer portion, exhibited cracking percentages of 50% or less, which is a satisfactory result.

The test samples of Examples 2 to 6, in which in a WT cross section, the difference between the void area occupancy percentage PCW in the widthwise central dielectric layer portion and the void area occupancy percentage PEW in each widthwise end dielectric layer portion was 1.0% or more and 8.0% or less, exhibited cracking percentages of 11% or more and 30% or less, which is a more satisfactory result.

The test samples of Examples 8 to 10, in which in an LT cross section, the difference between the void area occupancy percentage PCL in the lengthwise central dielectric layer portion and the void area occupancy percentage PEL in each lengthwise end dielectric layer portion was 4.0% or more and 8.0% or less, exhibited cracking percentages of 10% or less, which is a still more satisfactory result.

In contrast, the test sample of the Comparative Example, in which the widthwise end dielectric layer portion and each widthwise central dielectric layer portion contained the same quantity of voids, exhibited a cracking percentage of 66%.

The above results suggest that according to the present invention, by virtue of the configuration in which the inner layer portion of the multilayer body includes the inner dielectric layers, each inner dielectric layer contains voids, the inner dielectric layers include the widthwise central dielectric layer portion located in a central region in the width direction of the inner layer portion and the widthwise end dielectric layer portions located in end regions in the width direction of the inner layer portion, and each widthwise end dielectric layer portion contains a smaller quantity of voids than the widthwise central dielectric layer portion, areas which are near the ends in the width direction of the dielectric layers included in the inner layer portion of the multilayer body and in which electrostrictive stress concentrates have a smaller quantity of voids than an area near the center in the width direction of the dielectric layers, thereby making it possible to reduce the occurrence of electrostrictive cracks.

It should be noted that the present invention is not limited to the embodiments disclosed in the above description.

In other words, various modifications can be made to the above-described embodiments in terms of the mechanism, the shape, the material, the quantity, the position, the arrangement, and the like without departing from the technical idea and the object of the present invention, and these modifications are encompassed in the scope of the present invention.

### EXPLANATION OF REFERENCE NUMERALS

10: Multilayer ceramic capacitor
12: Multilayer body
12a: First main surface
12b: Second main surface
12c: First side surface
12d: Second side surface
12e: First end surface
12f: Second end surface
14: Dielectric layer
14a: Inner dielectric layer
14a1: Widthwise central dielectric layer portion
14a2: Widthwise end dielectric layer portion
14a3: Lengthwise central dielectric layer portion
14a4: Lengthwise end dielectric layer portion
14b: Outer dielectric layer
16: Inner layer portion
18a: First outer layer portion
18b: Second outer layer portion
20: Internal electrode layer
20a: First internal electrode layer
20b: Second internal electrode layer
20c: Floating internal electrode layer
22: Counter electrode portion
22a: First counter electrode portion
22b: Second counter electrode portion
24a: First lead-out electrode portion
24b: Second lead-out electrode portion
26a: Side portion (W gap)
26b: End portion (L gap)
30: External electrode
30a: First external electrode
30b: Second external electrode
32: Base electrode layer
32a: First base electrode layer
32b: Second base electrode layer
34: Plating layer
34a: First plating layer
34b: Second plating layer
36: Lower plating layer
36a: First lower plating layer
36b: Second lower plating layer
38: Upper plating layer
38a: First upper plating layer
38b: Second upper plating layer
WA: Region included in the widthwise end dielectric layer
portion and containing voids
LA: Region included in the lengthwise end dielectric layer
portion and containing voids
X: Height direction (lamination direction)
Y: Width direction
Z: Length direction

## Claims

1. A multilayer ceramic capacitor, comprising:
a multilayer body including a plurality of dielectric layers that are laminated and a plurality of internal electrode layers that are laminated,
the multilayer body having a first main surface and a second main surface opposed to each other in a height direction in which the plurality of dielectric layers are laminated, a first side surface and a second side surface opposed to each other in a width direction orthogonal to the height direction, and a first end surface and a second end surface opposed to each other in a length direction orthogonal to the height direction and the width direction,
the multilayer body including
an inner layer portion in which the plurality of dielectric layers and the plurality of internal electrode layers are alternately laminated, and
outer layer portions respectively disposed adjacent to the first main surface and the second main surface so as to sandwich the inner layer portion therebetween;
a first external electrode disposed on the first end surface; and
a second external electrode disposed on the second end surface, wherein
the plurality of dielectric layers in the multilayer body include an inner dielectric layer that constitutes the inner layer portion,
the inner dielectric layer contains voids,
the inner dielectric layer includes a widthwise central dielectric layer portion located in a central region in the width direction of the inner layer portion and a widthwise end dielectric layer portion located in an end region in the width direction of the inner layer portion, and
the widthwise end dielectric layer portion contains a smaller quantity of the voids than the widthwise central dielectric layer portion.

2. The multilayer ceramic capacitor according to claim 1,
wherein
in a WT cross section, a difference between a void area occupancy percentage PCW in the widthwise central dielectric layer portion and a void area occupancy percentage PEW in the widthwise end dielectric layer portion is 1.0% or more and 8.0% or less.
